(19) Europäisches Patentamt
European Patent Office
Office européen des brevets

(11) **EP 4 064 227 A1**

(12) **EUROPEAN PATENT APPLICATION**

(43) Date of publication:
**28.09.2022   Bulletin 2022/39**

(21) Application number: **21194365.9**

(22) Date of filing: **01.09.2021**

(51) International Patent Classification (IPC):
**G06V 30/412** (2022.01)   **G06V 10/24** (2022.01)
**G06V 10/22** (2022.01)

(52) Cooperative Patent Classification (CPC):
**G06V 30/412; G06V 10/235; G06V 10/24**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **24.03.2021   JP 2021050772**

(71) Applicant: **Fujifilm Business Innovation Corp.
Tokyo 107-0052 (JP)**

(72) Inventors:
• **YAMAGUCHI, Masayuki
Yokohama-shi, 220-0012 (JP)**

• **KUBO, Shusaku
Yokohama-shi, 220-0012 (JP)**
• **ANDO, Jun
Yokohama-shi, 220-0012 (JP)**
• **SUZUKI, Yusuke
Yokohama-shi, 220-0012 (JP)**
• **KOSAKA, Fumi
Yokohama-shi, 220-0012 (JP)**
• **OKADA, Shigeru
Yokohama-shi, 220-0012 (JP)**

(74) Representative: **Carstens, Dirk Wilhelm
Wagner & Geyer Partnerschaft mbB
Patent- und Rechtsanwälte
Gewürzmühlstraße 5
80538 München (DE)**

(54)    **INFORMATION PROCESSING APPARATUS, INFORMATION PROCESSING PROGRAM, AND INFORMATION PROCESSING METHOD**

(57)    An information processing apparatus includes a processor configured to acquire a form image that is obtained from reading of a form in which form information including at least one of a predetermined item or an item value is written, extract the form information from the acquired form image, identify a reference form corresponding to the form image from the extracted form information, correct a revised position using a difference between a position of form information, of which a corresponding reference position is not revised, of the extracted form information and a reference position corresponding to the position, in a case where the reference position of form information of the reference form is revised to the revised position by user's designation, and extract the form information at the corrected revised position.

FIG. 2

EP 4 064 227 A1

**Description**

BACKGROUND OF THE INVENTION

(i) Field of the Invention

The present invention relates to an information processing apparatus, an information processing program, and an information processing method.

(ii) Description of Related Art

JP2002-170079A discloses a document format identification device. The document format identification device includes a creation unit that creates document format data used to identify a document format on the basis of the feature quantity of a document image, a storage unit that stores the document format data, a determination unit that uses the creation unit to obtain document format data from an image of a document of which a document format is to be identified, compares this document format data with the document format data stored in the storage unit, and determines whether or not the document format data has a similarity relationship, a similarity information extraction unit that extracts similarity information representing the state of similarity between the document of which a document format is to be identified and the document stored in the storage unit in a case where the determination unit determines that the document format data has similarity, and an identification unit that calculates the similarity of the document format on the basis of the similarity information extracted by the similarity information extraction unit and the document format data and identifies the document format of the document to be identified.

SUMMARY OF THE INVENTION

In a case where form information is extracted from a form image obtained from the reading of a form in which form information including at least one of a predetermined item or an item value is written, a reference form corresponding to the form image is identified from the extracted form information, and the reference position of form information of the reference form is revised to a revised position by user's designation, the form information cannot be extracted at the designated revised position in a case where the distortion of the form image, such as the deviation of the position of the form image, is more than the distortion of the reference form.

An object of the present invention is to provide an information processing apparatus, an information processing program, and an information processing method that can extract form information even though a read form image is distorted in a case where a reference position of form information of a reference form is revised to a revised position by user's designation.

According to a first aspect of the present disclosure, there is provided an information processing apparatus including a processor configured to acquire a form image that is obtained from reading of a form in which form information including at least one of a predetermined item or an item value is written, extract the form information from the acquired form image, identify a reference form corresponding to the form image from the extracted form information, correct a revised position using a difference between a position of form information, of which a corresponding reference position is not revised, of the extracted form information and a reference position corresponding to the position, in a case where the reference position of form information of the reference form is revised to the revised position by user's designation, and extract the form information at the corrected revised position.

According to a second aspect of the present disclosure, in the information processing apparatus according to the first aspect, the processor may be configured to correct the revised position using a difference between a position of form information, of which a distance from the revised position satisfies a predetermined condition, in the form information of which the reference position is not revised and a reference position corresponding to the position.

According to a third aspect of the present disclosure, in the information processing apparatus according to the second aspect, the processor may be configured to correct the revised position using a difference between a position of form information, of which a distance from the revised position is a shortest distance, and a reference position corresponding to the position as the predetermined condition.

According to a fourth aspect of the present disclosure, in the information processing apparatus according to any one of the first to third aspects, the processor may be configured to control correction of the revised position using a variance of a distance between a position of the extracted form information and a reference position corresponding to the position.

According to a fifth aspect of the present disclosure, in the information processing apparatus according to the fourth aspect, the processor may be configured to correct the revised position in a case where the variance of the distance between the position of the extracted form information and the reference position corresponding to the position is equal to or less than a predetermined threshold value.

According to a sixth aspect of the present disclosure, in the information processing apparatus according to the fourth aspect, the processor may be configured to correct the revised position in a case where the variance of the distance between the position of the extracted form information and the reference position corresponding to the position is less than a predetermined variance threshold value and, in the form information of which the reference position is not revised, a distance between a position of form information, of which a distance from the revised position satisfies a predetermined condition, and the revised position is less than a predetermined distance threshold value.

According to a seventh aspect of the present disclosure, in the information processing apparatus according to the fourth aspect, the processor may be configured to accept correction of the revised position executed by a user in a case where the variance of the distance between the position of the extracted form information and the reference position corresponding to the position is less than a predetermined variance threshold value and, in the form information of which the reference position is not revised, a distance between a position of form information, of which a distance from the revised position satisfies a predetermined condition, and the revised position is equal to or larger than a predetermined distance threshold value.

According to an eighth aspect of the present disclosure, in the information processing apparatus according to any one of the first to seventh aspects, the processor may be configured to correct a size of a circumscribed region of form information at the revised position using a difference between a size of a circumscribed region of form information, of which a distance from the revised position satisfies a predetermined condition, in the form information of which the reference position is not revised and a size of a circumscribed region of form information at a reference position corresponding to the position.

According to a ninth aspect of the present disclosure, there is provided an information processing program causing a computer to execute a process comprising acquiring a form image that is obtained from reading of a form in which form information including at least one of a predetermined item or an item value is written, extracting the form information from the acquired form image, identifying a reference form corresponding to the form image from the extracted form information, correcting a revised position using a difference between a position of form information, of which a corresponding reference position is not revised, of the extracted form information and a reference position corresponding to the position, in a case where the reference position of form information of the reference form is revised to the revised position by user's designation, and extracting the form information at the corrected revised position.

According to a tenth aspect of the present disclosure, there is provided an information processing method comprising acquiring a form image that is obtained from reading of a form in which form information including at least one of a predetermined item or an item value is written, extracting the form information from the acquired form image, identifying a reference form corresponding to the form image from the extracted form information, correcting a revised position using a difference between a position of form information, of which a corresponding reference position is not revised, of the extracted form information and a reference position corresponding to the position, in a case where the reference position of form information of the reference form is revised to the revised position by user's designation, and extracting the form information at the corrected revised position.

According to the information processing apparatus of the first aspect, the information processing program of the ninth aspect, and the information processing method of the tenth aspect, form information can be extracted even though a read form image is distorted in a case where a reference position of form information of a reference form is revised to a revised position by user's designation.

According to the information processing apparatus of the second aspect, the revised position can be corrected with a high accuracy as compared to a case where whether or not a distance from the revised position satisfies the predetermined condition is not considered.

According to the information processing apparatus of the third aspect, the revised position can be corrected with a high accuracy as compared to a case where the revised position is corrected using the position of form information other than the form information of which a distance from the revised position is the shortest distance.

According to the information processing apparatus of the fourth aspect, control according to the type of distortion of the form image can be executed.

According to the information processing apparatus of the fifth aspect, the revised position can be corrected even in a case where the form image is rotated.

According to the information processing apparatus of the sixth aspect, the revised position can be corrected even in a case where the form image is translated.

According to the information processing apparatus of the seventh aspect, the revised position can be corrected even though a distance from the revised position is equal to or larger than the predetermined distance threshold value.

According to the information processing apparatus of the eighth aspect, the size of the circumscribed region of the form information at the revised position can be corrected even in a case where the size of the form image is changed.

BRIEF DESCRIPTION OF THE DRAWINGS

Exemplary embodiment(s) of the present invention will be described in detail based on the following figures, wherein:

Fig. 1 is a block diagram showing the hardware configuration of an information processing apparatus;
Fig. 2 is a block diagram showing the functional configuration of the information processing apparatus;
Fig. 3 is a diagram showing an example of a form;
Fig. 4 is a flowchart of information processing;
Fig. 5 is a diagram showing an example of the extraction result information of keys/values;

Fig. 6 is a diagram showing examples of a reference form;

Fig. 7 is a diagram showing an example of cosine similarity;

Fig. 8 is a diagram showing an example of a form;

Fig. 9 is a flowchart of revised position-correction processing;

Fig. 10 is a diagram showing an example of a form;

Fig. 11 is a diagram illustrating a case where the form is rotated;

Fig. 12 is a diagram showing an example of the extraction result information of a reference form;

Fig. 13 is a diagram showing an example of extraction result information in a case where a form to be processed is rotated;

Fig. 14 is a diagram illustrating the amounts of deviation between the keys/values of the reference form and the keys/values of the rotated form to be processed;

Fig. 15 is a diagram showing an example of extraction result information in a case where the form to be processed is translated; and

Fig. 16 is a diagram illustrating the amounts of deviation between the keys/values of the reference form and the keys/values of the translated form to be processed.

DETAILED DESCRIPTION OF THE INVENTION

An example of an exemplary embodiment of a disclosed technique will be described in detail below.

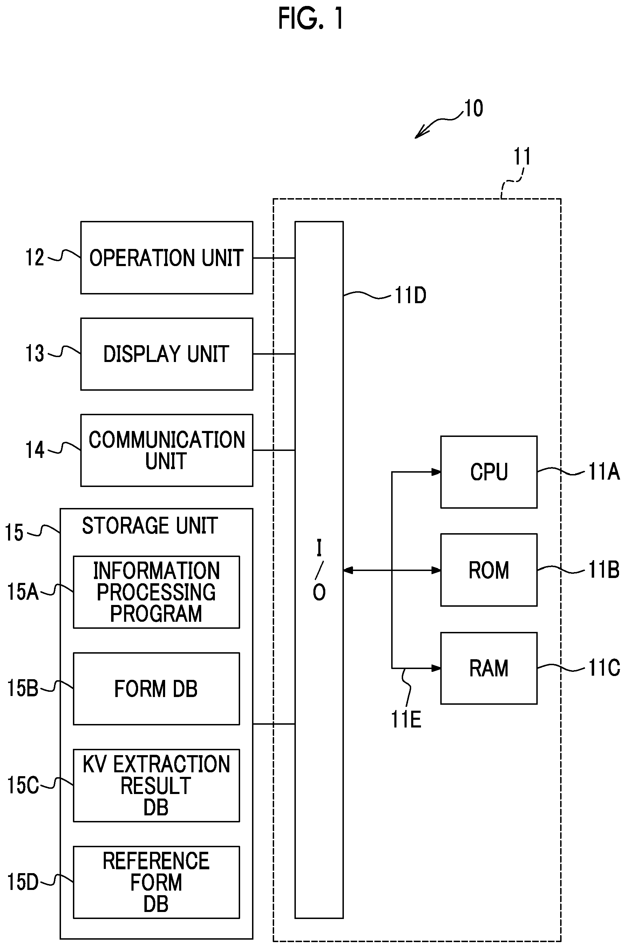

Fig. 1 is a block diagram showing the hardware configuration of an information processing apparatus 10. As shown in Fig. 1, the information processing apparatus 10 comprises a controller 11. The controller 11 comprises a central processing unit (CPU) 11A, a read only memory (ROM) 11B, a random access memory (RAM) 11C, and an input/output interface (I/O) 11D. Further, the CPU 11A, the ROM 11B, the RAM 11C, and the I/O 11D are connected to each other through a system bus 11E. The system bus 11E includes a control bus, an address bus, and a data bus. The CPU 11A is an example of a processor.

Further, an operation unit 12, a display unit 13, a communication unit 14, and a storage unit 15 are connected to the I/O 11D.

The operation unit 12 includes, for example, a mouse and a keyboard.

The display unit 13 is formed of, for example, a liquid crystal display or the like.

The communication unit 14 is an interface that is used for data communication with an external device.

The storage unit 15 is formed of a non-volatile external storage device, such as a hard disk, and stores an information processing program 15A, a form database (DB) 15B, and a reference form database (DB) 15D to be described later, and the like. The CPU 11A reads the information processing program 15A, which is stored in the storage unit 15, into the RAM 11C and executes the information processing program 15A.

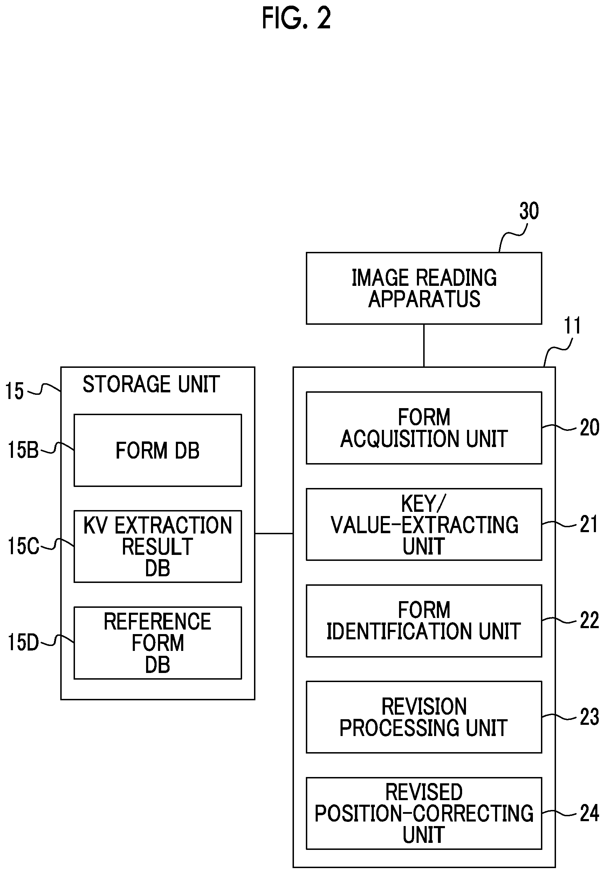

Fig. 2 is a block diagram showing the functional configuration of the controller 11 of the information processing apparatus 10. As shown in Fig. 2, the controller 11 comprises a form acquisition unit 20, a key/value (KV) extraction unit 21, a form identification unit 22, a revision processing unit 23, and a revised position-correcting unit 24 in terms of functions.

The form acquisition unit 20 acquires the image data of an image, which are obtained from the reading of a form, from an image reading apparatus 30 and stores the acquired image data in the form DB 15B.

For example, an image forming device or the like that includes a scanning function, a printer function, a FAX function, and the like is applied as the image reading apparatus 30. The form acquisition unit 20 may acquire the image data of a form from computer devices, such as a server computer and a personal computer.

The form is a document in which information is written in predetermined items. Examples of such a document include documents and the like in which information necessary for business or transactions is written, such as books, slips, applications, invoices, and application forms, but are not limited thereto. Writing includes not only a case where a user writes on the form by hand but also a case where a user inputs information to the form using a computer.

Further, the item of the form means a clue in a case where information written in the form is extracted from the image data of an image obtained from the reading of the form, that is, a specific character serving as a "key". Accordingly, the item of the form is referred to as a "key" in the following description. Furthermore, information representing the contents of the form is referred to as "item values" or "values". There are two types of values, that is, a value of which a corresponding key exists and a value of which a corresponding key does not exist. A key of which a corresponding value does not exist may exist. In the following description, information including at least one of a key or a value may be referred to as form information.

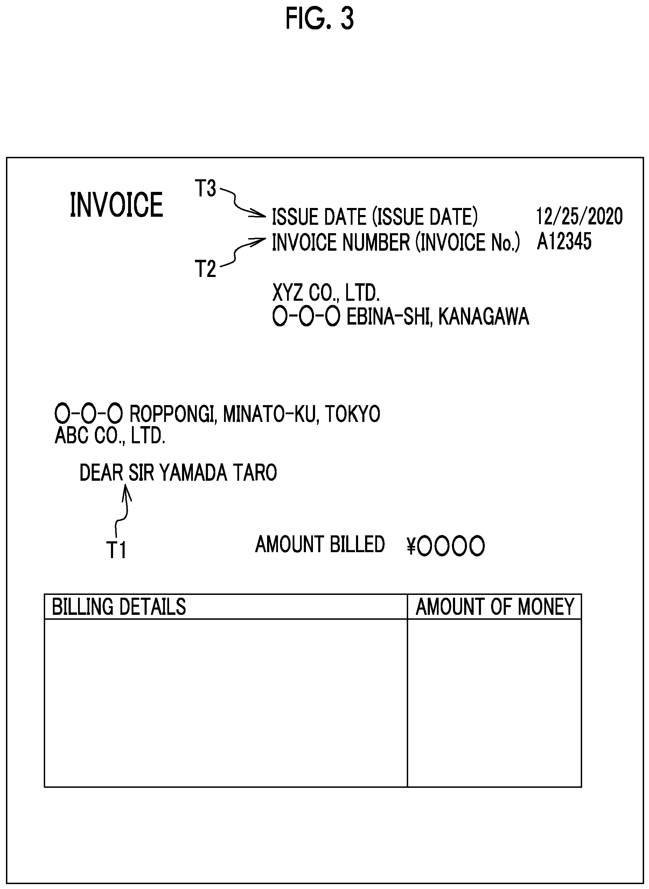

In a case where a form is, for example, an invoice shown in Fig. 3, a specific character T1 "Dear Sir" representing the issue destination of the invoice, a specific character T2 "invoice number" representing the number of the invoice, a specific character T3 "issue date" representing the issue date of the invoice, and the like are included as keys. The description of the amount billed, and the like will be omitted here.

In the case of an example shown in Fig. 3, a character "Yamada Taro" written next to the left side of the specific character T1 is a value representing the name of the issue destination corresponding to the key "Dear Sir". Further, "A12345" written on the right side of the specific character T2 is a value representing the value of the invoice number corresponding to the key "invoice number". Furthermore, "2020/12/25" written on the right side of the specific character T3 is a value representing an issue date corresponding to the key "issue date". The specific character T1 "invoice" is also a value but does not have a corresponding key. Moreover, a character "XYZ Co., Ltd." or the like has a value but does not have a corresponding key.

The key/value-extracting unit 21 executes optical character recognition processing (OCR) for the image data of the form that are acquired by the form acquisition unit 20. Characters included in the form and information about the positions of the characters on the form are obtained as character recognition results from the optical character recognition processing.

Further, the key/value-extracting unit 21 extracts the characters of keys and values and the positions of the characters on the form according to a predetermined extraction condition. Here, a character means both the case of one character and the case of a character string formed of a plurality of characters.

In a case where the character of a key to be extracted and a value corresponding to the key to be extracted exist, the read position and the like of the value are defined in the extraction condition. The read position of the value is defined as information about a position relative to the key, and, for example, at least one of information about a direction relative to the key, such as the right side or the lower side of the key, or information about a distance from the key is defined.

In a case where the read position of the value corresponding to, for example, the key "Dear Sir" is defined to be positioned on the left side of the key and the form of the invoice shown in Fig. 3 is read, "Dear Sir" is extracted as the key and "Yamada Taro" is extracted as the value. Accordingly, the key and the value are extracted as a set. Only the key or only the value may be extracted depending on the extraction condition. Publicly known various techniques are used for key/value extraction processing executed by the key/value-extracting unit 21. In the following description, the extraction results of keys/values obtained from the key/value extraction processing are referred to as extraction result information.

The form identification unit 22 identifies the format of the form by analyzing the image data of the form that are acquired by the form acquisition unit 20. Further, the form identification unit 22 generates extraction result information as necessary as information that is necessary to identify the format of the form, and registers the generated extraction result information in the reference form DB 15D.

Here, the format of a form means a format that is determined depending on the positions of keys and values of the form. For example, in a case where the types of forms, such as an invoice and a statement of delivery, are different from each other, the formats of the forms are different from each other. Further, in a case where the position of at least one key or value among keys and values included in forms is different even though the types of the forms are the same, the formats of the forms are different from each other. In a case where the positions of corresponding keys and values are completely the same in two forms, that is, a form as a reference and a form as an object to be determined at the time of determination of the formats of the forms, the forms are determined as forms having the same format in this exemplary embodiment. On the other hand, in a case where the position of at least one key or value among the positions of corresponding keys and values is different in two forms, the forms are determined as forms having different formats.

The form identification unit 22 identifies the format of the form by determining whether or not the form from which the keys and the values have been extracted by the key/value-extracting unit 21 and a reference form of which the extraction result information is registered in the reference form DB 15D are the same.

The revision processing unit 23 causes a user to confirm the positions and sizes of the keys and the values of the reference form and accepts revision. Then, in a case where the revision processing unit 23 accepts revision, the revision processing unit 23 reflects a revised position and a revised size in the reference form DB 15D. Further, the revision processing unit 23 executes the optical character recognition processing at the revised position.

The revised position-correcting unit 24 detects the distortion of a read form image, and corrects the revised position according to the detected distortion.

The image data of the form acquired by the form acquisition unit 20 are accumulated in the form DB 15B. Information about the keys and the values extracted by the key/value-extracting unit 21 is registered in a KV extraction result DB 15C as key/value extraction results. The key/value extraction results obtained from the key/value-extracting unit 21 are registered in the reference form DB 15D as the extraction result information of the reference form, and are used to determine whether or not the format of a form as an object to be processed is the same as the format of the reference form.

The form DB 15B, the KV extraction result DB 15C, and the reference form DB 15D are provided in the information processing apparatus 10 in this exemplary embodiment, but at least some of these databases may be provided in, for example, an external device connected to a network.

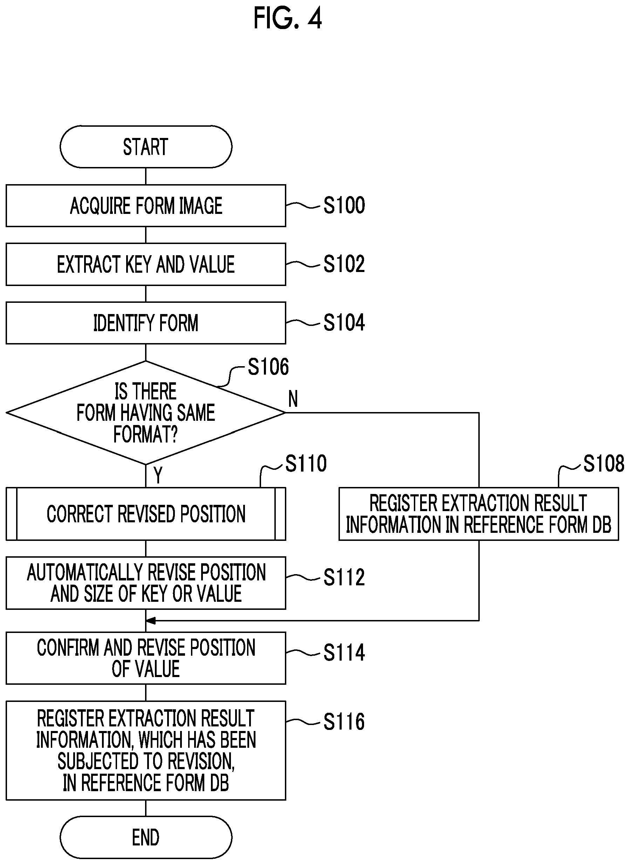

Next, the action of the information processing apparatus 10 according to this exemplary embodiment will be described. Fig. 4 is a flowchart showing the flow of information processing that is executed by the information processing apparatus 10 according to this exemplary embodiment. The CPU 11A reads the information processing program 15A stored in the storage unit 15, so that the information processing shown in Fig. 4 is executed.

In Step S100, the CPU 11A acquires the image data of a form read by the image reading apparatus 30, that is, a form to be processed.

In Step S102, the CPU 11A extracts keys and values by analyzing the image data of the form to be processed, which are acquired in Step S100, using a publicly known technique. Then, the CPU 11A registers the extraction result information of the extracted keys/values, that is, information representing the characters and positions of the keys and the values in the KV extraction result DB 15C.

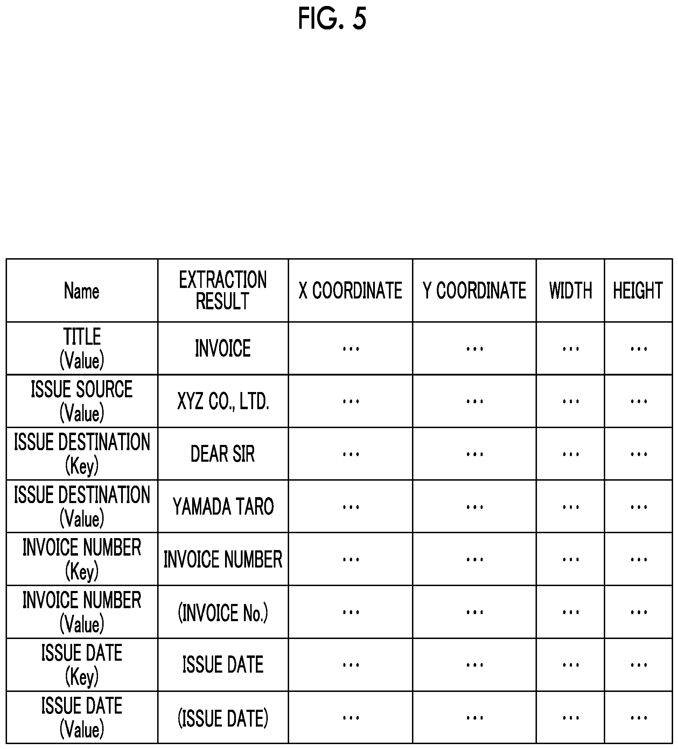

Fig. 5 shows an example of the extraction result information of keys/values in a case where the form shown in Fig. 3 is the form to be processed. As shown in Fig. 5, the extraction result information includes information about "Name" representing the types of the extracted characters, "Extraction result" representing the characters extracted by the OCR processing, "X coordinate" representing the positions of the extracted characters on the form in an X direction (traverse direction), "Y coordinate" representing the positions of the extracted characters on the form in a Y direction (longitudinal direction), "Width" representing the widths (the lengths in the X direction) of the circumscribed rectangles of the extracted characters, and "Height" representing the heights (the lengths in the Y direction) of the circumscribed rectangles of the extracted characters. The X coordinate and the Y coordinate are coordinates in a case where the upper left corner of the form is set as the origin.

In Step S104, the CPU 11A identifies the type of the form on the basis of the extraction results of the keys and the values extracted in Step S102.

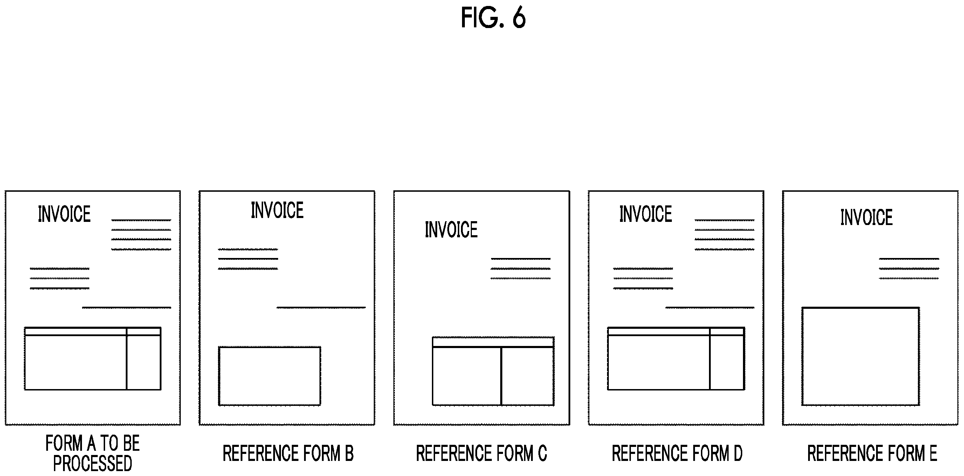

In this exemplary embodiment, the CPU 11A identifies the type of the form using cosine similarity. Here, a case where the key/value extraction result information of forms B to E as reference forms is already registered in the reference form DB in processing of Step S108 to be described later and a form to be processed is a form A as shown in Fig. 6 will be described.

With regard to the cosine similarity, data having n elements are represented by n-dimensional space vectors and similarity is represented by an angle between the vectors. In a case where two data to be compared with each other are denoted by x and y, cosine similarity $\cos\theta$ is represented by the following equation.

$$\cos\theta = \frac{\langle x, y \rangle}{\|x\| \cdot \|y\|} \quad \dots \quad (1)$$

Cosine similarity $\cos\theta$ has a value in the range of -1 to +1, and similarity is higher as the cosine similarity $\cos\theta$ is closer to +1.

For example, in this exemplary embodiment, the positions of keys and values of two forms to be compared with each other are represented by n-dimensional space vectors and cosine similarity is calculated by Equation (1).

Specifically, cosine similarity between the form A, which is the form to be processed, and each of the forms B to E, which are the reference forms, is calculated. Then, among the reference forms that have the calculated cosine similarity equal to or larger than a predetermined threshold value, the format of the reference form having the highest cosine similarity is identified as the format of the form A. The threshold value is set to a value where the two forms can be determined as forms having the same format in a case where the calculated cosine similarity is equal to or larger than the threshold value and the two forms can be determined as forms having different formats in a case where the calculated cosine similarity is less than the threshold value.

In a case where cosine similarity is calculated, the positions of all keys and values included in the form do not need to be used and the positions of at least one of at least two or more keys or values among the positions of all the keys and the values included in the form may be included.

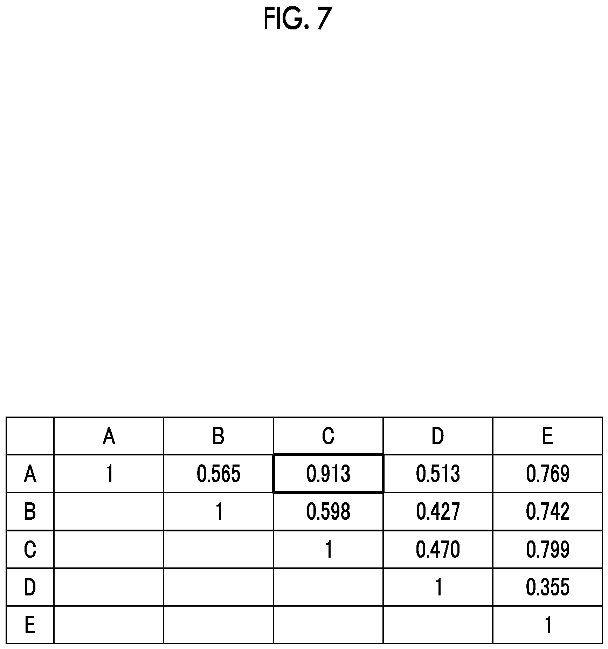

Fig. 7 shows the calculation result of cosine similarity between the form A and each of the forms B to E in a case where the positions, that is, X coordinates and Y coordinates of six keys including, for example, a title (invoice) among the positions of the keys and the values included in the form are represented by 12-dimensional vectors.

For example, in a case where a threshold value, which is a reference used to determine whether or not forms are the same, is set to 0.8, the form having cosine similarity of 0.8 or more is only the form C having cosine similarity of 0.913 in an example shown in Fig. 7. Accordingly, it is determined that the format of the form A is the same as the format of the form C.

In Step S106, the CPU 11A determines whether or not there is a reference form having the same format as the form to be processed in the form identification processing of Step S104. Then, in a case where there is no reference form having the same format as the form to be processed, the processing proceeds to Step S108. In a case where there is a reference form having the same format as the form to be processed, the processing proceeds to Step S110.

In Step S108, the CPU 11A registers the extraction result information of the keys/values, which are extracted in Step S102, in the reference form DB 15D as a reference form. For example, in a case where cosine similarity between the forms A and C is less than 0.8 in the example shown in Fig. 7 that is the calculation result of cosine similarity, a reference form having the same format as the form C does not exist. Since the form A is considered as a new form in this case, the CPU 11A registers the extraction result information of the keys/values of the form A in the reference form DB 15D.

For convenience of description, processing of Steps S110 and S112 will be described later and processing of Step S114 to be executed after Step S108 will be described.

In Step S114, the CPU 11A executes confirmation/revision processing of causing a user to confirm and revise the positions of the values of the form. For example, in a case where the position of a value corresponding to "invoice number", which is a key, is defined as a position next to the right side of the key as the extraction condition for keys/values in the case of the invoice shown in Fig. 3, "(INVOICE No.)" positioned next to the right side of "invoice number" is recognized as the value even though the original invoice number is "A12345" positioned slightly away. Likewise, in a case where the position of a value corresponding to "issue date", which is a key, is defined as a position next to the right side of the key as the extraction condition for keys/values, "(ISSUE DATE)" positioned next to the right side of "issue date" is recognized as the value even though the original issue date is "2020/12/25" positioned slightly away.

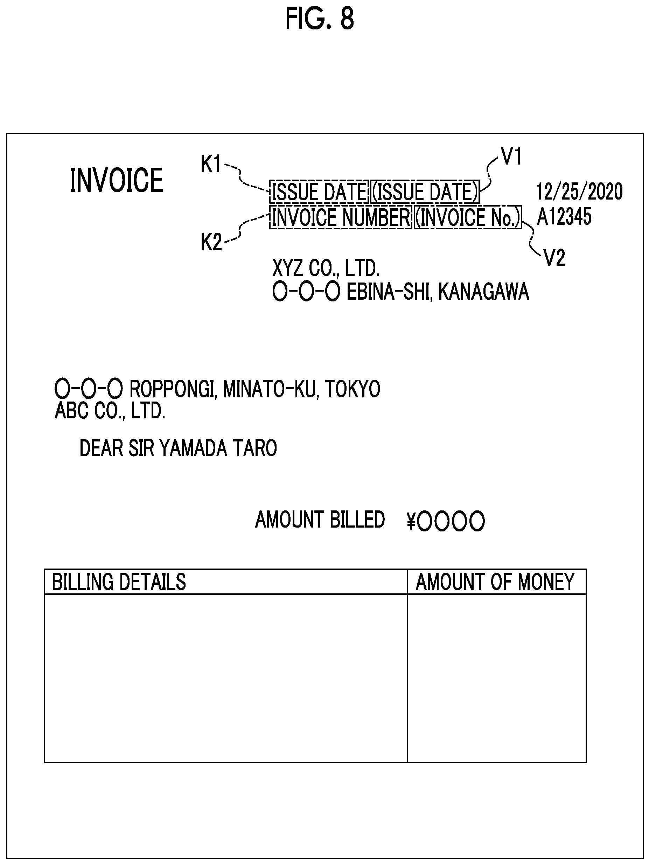

Accordingly, an edit screen in which the positions of values included in the form can be edited is displayed on the display unit 13. In this case, the edit screen is displayed so that sets of keys and values automatically extracted are understood. For example, in a case where ranges specified from the positions of keys and values, for example, circumscribed regions are displayed so as to be surrounded by frames as shown in Fig. 8, the frames of the keys and the values are displayed by different types of lines and the frames of the same set are displayed by the same line color. Accordingly, the sets of keys and values and the types of keys and values are easily recognized. In an example shown in Fig. 8, the types of lines of frames K1 and K2 of the keys are different from the types of lines of frames V1 and V2 of the values. The keys and the values may be displayed in other display manners, such as coloring the inside of the rectangular regions.

In the example shown in Fig. 8, a user confirms the position of the value corresponding to "invoice number" and the position of the value corresponding to "issue date", and gives an instruction to revise the positions to desired revised positions, respectively, in a case where the positions are deviated. In the case of the example shown in Fig. 8, the position of the frame is moved so that "A12345", which is a correct value corresponding to "invoice number", is surrounded by the frame. Likewise, the position of the frame is moved so that "2020/12/25", which is a correct value corresponding to "issue date", is surrounded by the frame.

In a case where an operation for revising the position of the value to a revised position is executed, the coordinates, that is, at least one coordinate of the X coordinate or the Y coordinate of the value subjected to revision is updated. Further, in a case where the size of a character is different from the size of the frame, a user may change the size of the frame by a predetermined operation. In this case, the size, that is, at least one of the width or height of the rectangular region of the value is updated according to the user's operation for changing the size of the frame. The position of the value has been described here by way of example, but the position of the key can also be revised likewise.

In Step S116, the CPU 11A registers extraction result information, in which the position of the value subjected to revision by the user is reflected, in the reference form DB 15D. The CPU 11A registers extraction result information, which is not yet subjected to revision, and extraction result information, which is subjected to revision, in the reference form DB 15D as a set. Accordingly, in a case where this routine is executed the next time or later, values are extracted on the basis of the extraction result information subjected to revision. Therefore, for example, in a case where a read form is an invoice shown in Fig. 8, values corresponding to "invoice number" and "issue date" are appropriately read. That is, "A12345" is read as the value corresponding to "invoice number" and "2020/12/25" is read as the value corresponding to "issue date".

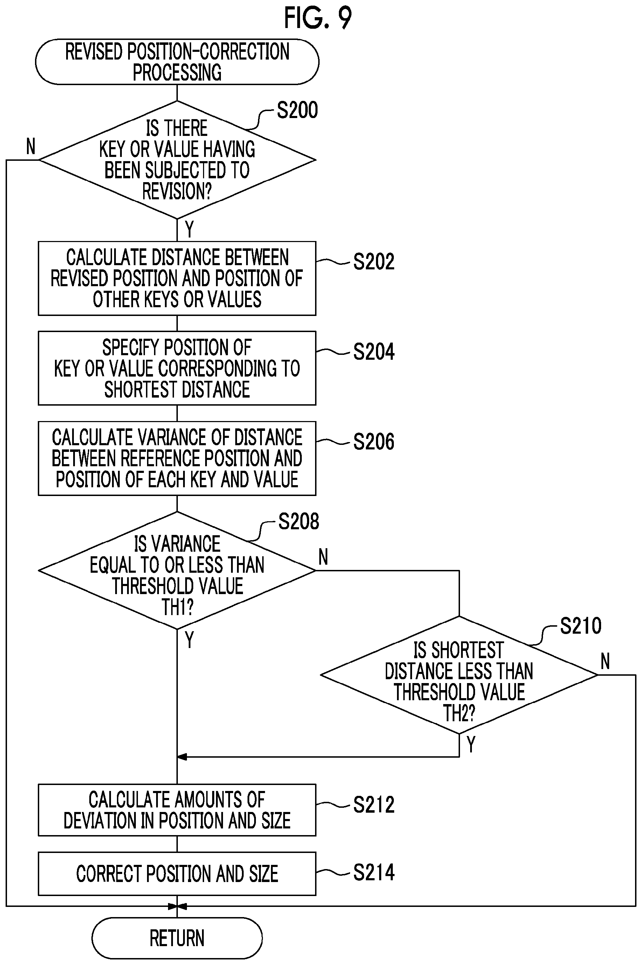

Next, in Step S110, the CPU 11A executes revised position-correction processing shown in Fig. 9. In a case where the form is set in a state where the attitude or position of the form is deviated or there is a problem with the accuracy of reading of the image reading apparatus 30 while the image reading apparatus 30 reads a form, the read form may be distorted. Here, the distortion of the form means the occurrence of at least one phenomenon among a phenomenon where the image of the read form is rotated from a reference attitude, a phenomenon where the image of the read form is translated from a reference position, or a phenomenon where the size of the image of the read form is increased or reduced with respect to a reference size.

In a case where the distortion of the form occurs and a key can be extracted, the position of a value is defined as a position relative to the position of the key. Accordingly, the value can be extracted without any problem. However, in a case where the position of the value is manually revised by a user in the processing of Step S114, the position of the value is registered in the reference form DB 15D as an absolute position. For this reason, in a case where the read form is distorted, a value of which the position is manually revised may not be capable of being accurately extracted.

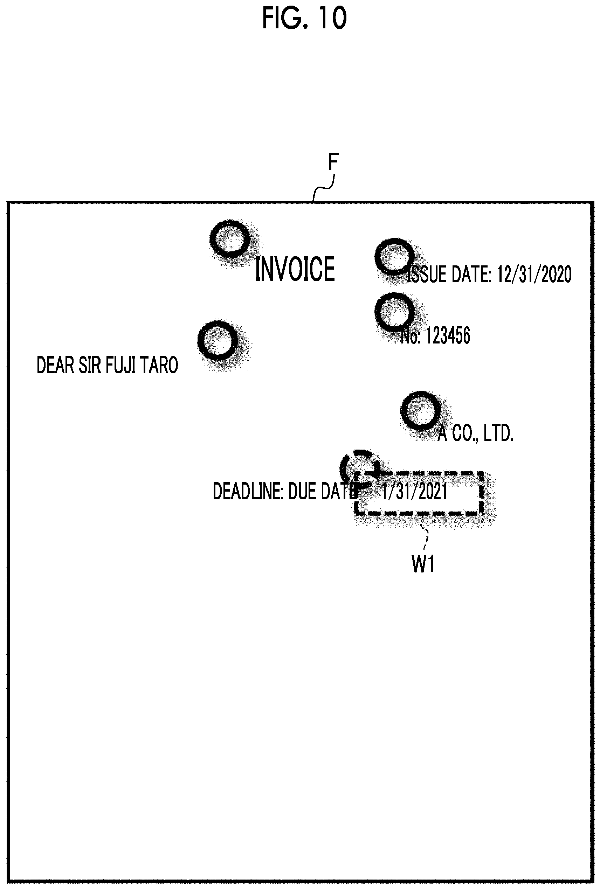

In a case where a form to be processed is a form F of an invoice shown in Fig. 10 and the processing of Fig. 4 is executed on the form first, it is assumed that "DUE DATE" positioned next to the right side of "deadline" is extracted by mistake as a value corresponding to "deadline" which is a key. In Fig. 10, a black circle shown by a solid line represents the position of the key or the value. Since the value corresponding to "deadline" is "2021/1/31" in this case, a user revises the position of the value by moving a frame W1, which represents the circumscribed region of "DUE DATE" extracted as the value corresponding to "deadline", to the position of "2021/1/31" in the processing of Step S114. In Fig. 10, the position of "2021/1/31" is represented by a black circle shown by a broken line (the position of the upper left corner of the frame W1).

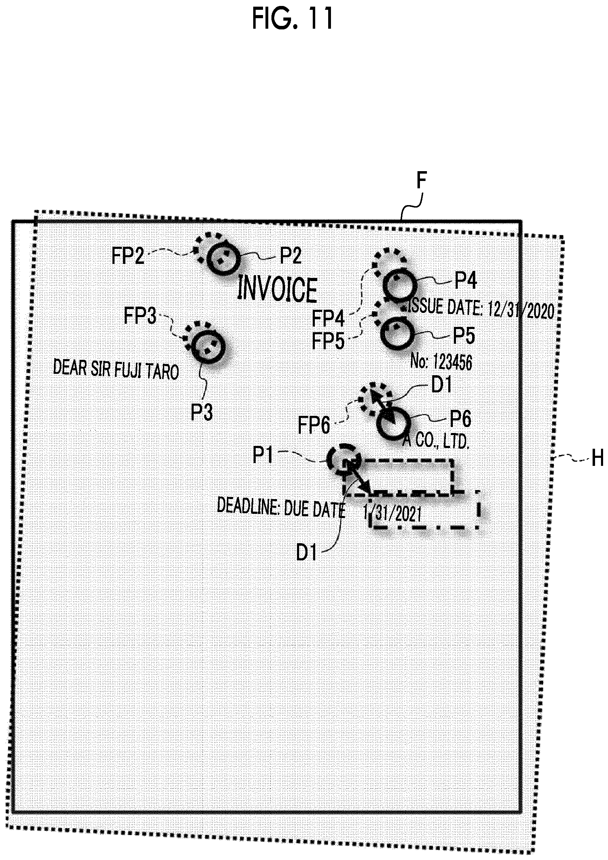

Further, in a case where the form F becomes an object to be processed again after the position of the value is revised, it is assumed that the form F is read in a state where the form F is rotated as shown by a broken line H of Fig. 11. In this case, with regard to values corresponding to "Dear Sir", "issue date", and the like that are keys other than "deadline", values can also be extracted in a case where keys can be extracted. The reason for this is that the positions of the values corresponding to these keys are not revised manually and are defined as positions relative to the positions of the keys.

On the other hand, since the position of the value corresponding to "deadline" is manually revised to an absolute position, a value is extracted at the revised position regardless of the distortion of the form F. However, since "2021/1/31", which is an actual value, is deviated to the lower right side as shown in Fig. 11, a value cannot be extracted.

Accordingly, the revised position of a value is corrected on the basis of the amounts of deviation in the positions of other keys/values in the revised position-correction processing of Fig. 9 so that the value can be extracted with a high accuracy even in a case where the position of the value is manually revised.

In Step S200, the CPU 11A determines whether or not there is a key or a value of which at least one of the coordinate or the size is revised among the keys and values that are included in the reference form and identified in Step S104 of Fig. 4. Then, in a case where there is a key or a value having been subjected to revision, the processing proceeds to Step S202. In a case where there is no key or value having been subjected to revision, the processing returns to the processing of Fig. 4.

In Step S202, the CPU 11A calculates a distance between the revised position of the key or the value of which at least one of the coordinate or the size is revised and each of the positions of other keys and values. In the case of an example shown in Fig. 11, the CPU 11A calculates distances between a revised position P1 of a revised value corresponding to "deadline", which is a key, and positions P2 to P6 of other keys and values, respectively.

In Step S204, the CPU 11A specifies a key or a value corresponding to the shortest distance among the distances calculated in Step S202. The shortest distance from the revised position is used in this exemplary embodiment, but the present invention is not limited thereto. For example, an average and the like may be used as, for example, a value representing the tendency of the distances calculated in Step S202.

In Step S206, the CPU 11A calculates distances between the positions of keys and values of which the positions are not revised among the keys and values included in the form to be processed and the positions (reference positions) of keys and values of a corresponding reference form, respectively. Then, the CPU 11A calculates a variance of the respective calculated distances.

In the example shown in Fig. 11, the CPU 11A calculates a distance between a position P2 of "invoice" of a form F as an object to be processed and a reference position FP2 of "invoice" of a corresponding reference form. Further, the CPU 11A calculates a distance between a position P3 of "Dear Sir" of the form to be processed and a reference position FP3 of "Dear Sir" of the corresponding reference form. Furthermore, the CPU 11A calculates a distance between a position P4 of "issue date" of the form to be processed and a reference position FP4 of "issue date" of the corresponding reference form. Moreover, the CPU 11A calculates a distance between a position P5 of "No.: 123456" of the form to be processed and a reference position FP5 of "No.: 123456" of the corresponding reference form. Further, the CPU 11A calculates a distance between a position P6 of "A Co., Ltd." of the form to be processed and a reference position FP6 of "A Co., Ltd." of the corresponding reference form. Then, the CPU 11A calculates a variance of the respective calculated distances.

Here, since a case where the variance is large means that a variation of the distances is large, there is a high possibility that the read form has been rotated. On the other hand, since a case where the variance is small means that a variation of the distances is small, there is a high possibility that the read form has been translated or has not been moved.

Accordingly, in Step S208, the CPU 11A determines whether or not the variance calculated in Step S206 is equal to or less than a predetermined variance threshold value TH1. The variance threshold value TH1 is set to a value where it can be determined that the read form is translated in a case where the variance is equal to or less than the threshold value TH1.

Then, in a case where the variance is equal to or less than the variance threshold value TH1, that is, in a case where the form is considered to be translated, the processing proceeds to Step S210. In a case where the variance is larger than the threshold value TH1, that is, in a case where the form is considered to be rotated, the processing proceeds to Step S212.

In Step S212, the CPU 11A determines whether or not the shortest distance specified in Step S204 is less than a predetermined distance threshold value TH2. The distance threshold value TH2 is set to a value where a position can be corrected in processing of Step S214 to be described later in a case where the shortest distance is less than the distance threshold value TH2 and it can be determined that it is better to manually revise a position by a user in a case where the shortest distance is equal to or larger than the distance threshold value TH2.

Then, in a case where the shortest distance specified in Step S204 is less than the distance threshold value TH2, the processing proceeds to Step S212. In a case where the shortest distance is equal to or larger than the distance threshold value TH2, the processing returns to the processing of Fig. 4.

In Step S214, the CPU 11A calculates the amounts of deviation in position and scale. Specifically, the CPU 11A calculates a difference in a distance between the position of the key or the value corresponding to the shortest distance from the position of the key or the value, which is specified in Step S204 and is revised, and the position of a key or a value of the corresponding reference form as the amount of deviation in position.

Further, the CPU 11A calculates a difference between the size of the key or the value corresponding to the shortest distance from the position of the key or the value, which is specified in Step S204 and is revised, and the size of a key or a value of the corresponding reference form, that is, a difference in width and a difference in height as the amount of deviation in size.

In the example shown in Fig. 11, the position P6 of "A Co., Ltd." is closest to the revised position P1. For this reason, the CPU 11A calculates a distance D1 between the position P6 of "A Co., Ltd." of the form F to be processed and the reference position FP6 of "A Co., Ltd." of the corresponding reference form as the amount of deviation in position. Further, in a case where at least one of the width or height of the circumscribed region of "A Co., Ltd." of the form F to be processed is different from at least one of the width or height of the circumscribed region of "A Co., Ltd." of the corresponding reference form, the CPU 11A calculates a difference between both at least one of the width or height of the circumscribed region of "A Co., Ltd." of the form F to be processed and at least one of the width or height of the circumscribed region of "A Co., Ltd." of the corresponding reference form as the amount of deviation in size.

In Step S214, the CPU 11A corrects the revised position and the revised size of the circumscribed region of the key or the value on the basis of the amounts of deviation in position and size that are calculated in Step S214. In the example shown in Fig. 11, a position moved from the position P1 by the distance D1 is used as the revised position.

Returning to Fig. 4, in Step S112, optical character recognition processing is executed again with the revised position and the revised size that are corrected in Step S214 of Fig. 9. Accordingly, in a case where the position and size of the key or the value are revised by a user, the key or the value are extracted with high accuracy even though the form is rotated, translated, or is increased or reduced in image size. A character is recognized at the revised position revised from the position P1 in the example shown in Fig. 11, so that "2021/1/31" is extracted as the value of the deadline.

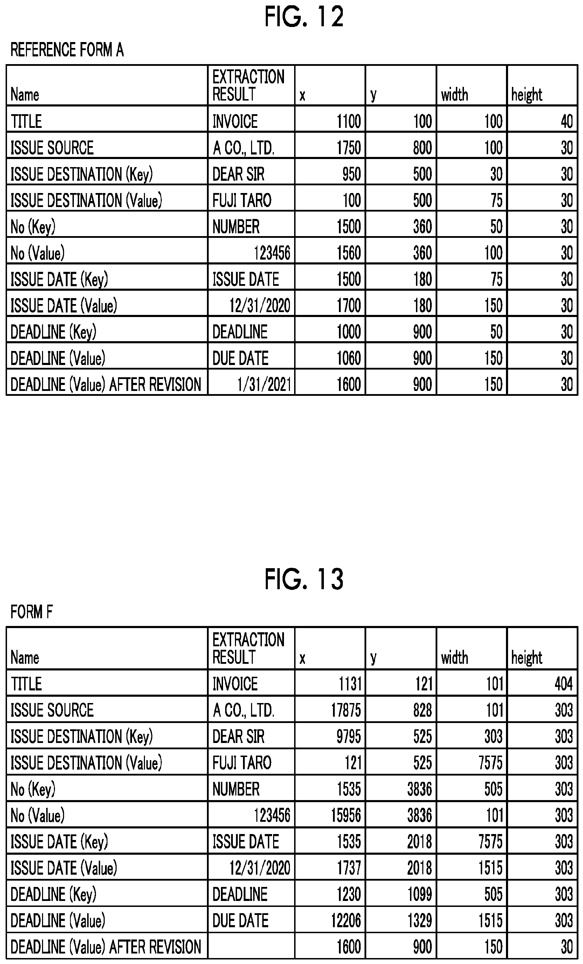

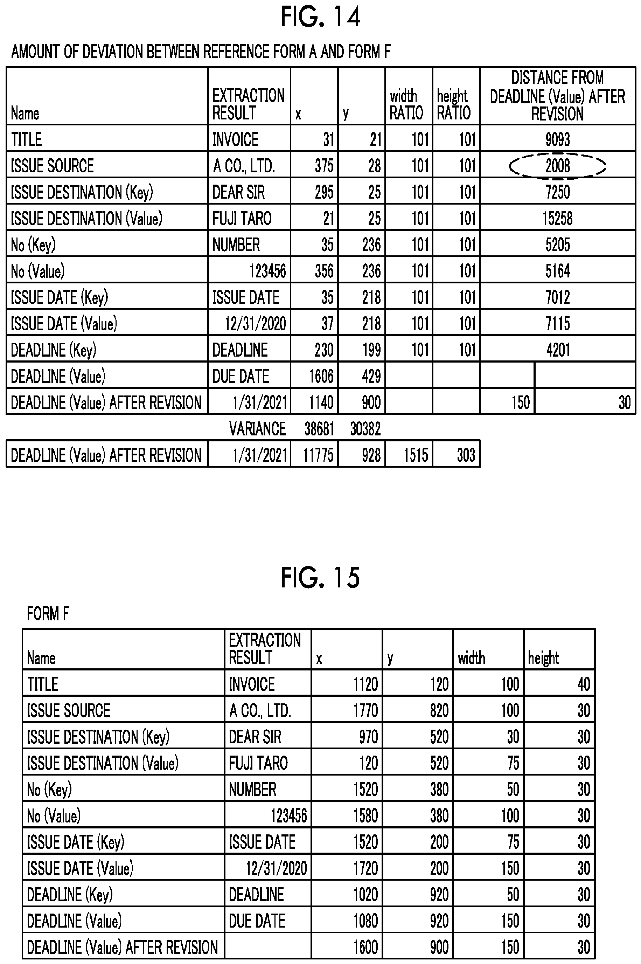

Fig. 12 shows an example of the extraction result information of a reference form A having the same format as the form F. Further, Fig. 13 shows an example of extraction result information in a case where the read form F is rotated. Furthermore, Fig. 14 shows the amounts of deviation between the positions and sizes of the corresponding keys and values of the reference form A and the positions and sizes of the corresponding keys and values of the form F. Information about the positions and sizes of the revised values of a deadline is also included in Figs. 12 to 14.

As shown in Fig. 14, it is understood that a value corresponding to the shortest distance from the position P1 of "2021/1/31", which is the revised value of a deadline, is the position P6 of "A Co., Ltd.".

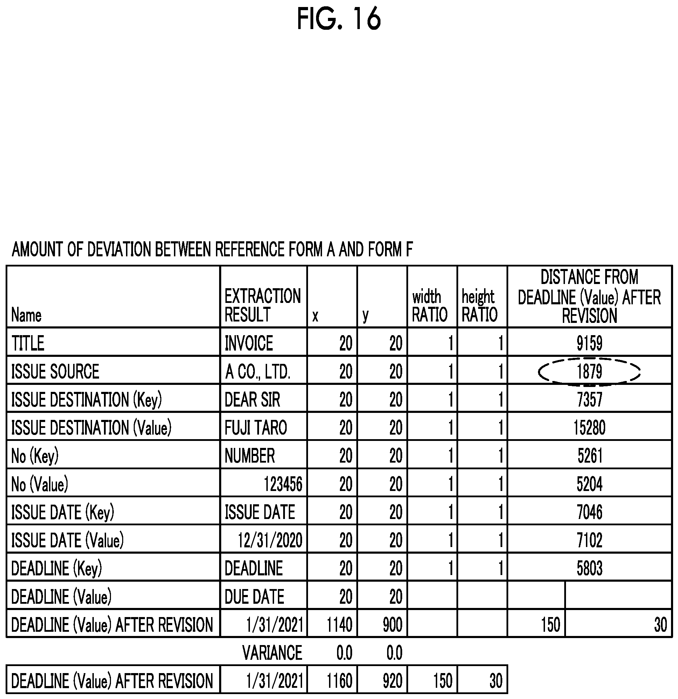

Further, Fig. 15 shows an example of extraction result information in a case where the read form F is translated. Furthermore, Fig. 16 shows the amounts of deviation between the positions and sizes of the corresponding keys and values of the reference form A and the positions and sizes of the corresponding keys and values of the form F.

As shown in Fig. 16, it is understood that a value corresponding to the shortest distance from the position P1 of "2021/1/31", which is the revised value of a deadline, is the position P6 of "A Co., Ltd.". However, since the amounts of deviation of each key and each value are equal to each other as shown in Fig. 16 in a case where the form is translated, the position of the key or the value corresponding to the shortest distance may not be used for the correction of the revised position.

A case where both a position and a size are corrected has been described in this exemplary embodiment, but only any one of a position and a size may be corrected.

Further, an aspect in which the information processing program is installed in the storage unit 15 has been described in this exemplary embodiment, but the present invention is not limited thereto. The information processing program 15A according to this exemplary embodiment may be provided in a form where the information processing program 15A is recorded on a computer-readable storage medium. For example, the information processing program 15A according to this exemplary embodiment may be provided in a form where the information processing program according to this exemplary embodiment is recorded on optical discs, such as a Compact Disc (CD)-ROM and a Digital Versatile Disc (DVD)-ROM, or a form where the information processing program according to this exemplary embodiment is recorded on semiconductor memories, such as a Universal Serial Bus (USB) memory and a memory card. Further, the information processing program according to this exemplary embodiment may be acquired from an external device through a communication line connected to the communication unit 14.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

Brief Description of the Reference Symbols

| 10: | information processing apparatus |
| 11: | controller |
| 12: | operation unit |
| 13: | display unit |
| 14: | communication unit |
| 15: | storage unit |
| 20: | form acquisition unit |
| 21: | key/value-extracting unit |
| 22: | form identification unit |
| 23: | revision processing unit |
| 24: | revised position-correcting unit |
| 30: | image reading apparatus |

**Claims**

1. An information processing apparatus comprising:
   a processor configured to:

   acquire a form image that is obtained from reading of a form in which form information including at least one of a predetermined item or an item value is written;
   extract the form information from the acquired form image;
   identify a reference form corresponding to the form image from the extracted form information;
   correct a revised position using a difference between a position of form information, of which a corresponding reference position is not revised, of the extracted form information and a reference position corresponding to the position, in a case where the reference position of form information of the reference form is revised to the revised position by user's designation; and
extract the form information at the corrected revised position.

2. The information processing apparatus according to claim 1, wherein the processor is configured to:
   correct the revised position using a difference between a position of form information, of which a distance from the revised position satisfies a predetermined condition, in the form information of which the reference position is not revised and a reference position corresponding to the position.

3. The information processing apparatus according to claim 2, wherein the processor is configured to:
   correct the revised position using a difference between a position of form information, of which a distance from the revised position is a shortest distance, and a reference position corresponding to the position as the predetermined condition.

4. The information processing apparatus according to any one of claims 1 to 3, wherein the processor is configured to:
   control correction of the revised position using a variance of a distance between a position of the extracted form information and a reference position corresponding to the position.

5. The information processing apparatus according to claim 4, wherein the processor is configured to:
   correct the revised position in a case where the variance of the distance between the position of the extracted form information and the reference position corresponding to the position is equal to or less than a predetermined threshold value.

6. The information processing apparatus according to claim 4, wherein the processor is configured to:
   correct the revised position in a case where the variance of the distance between the position of the extracted form information and the reference position corresponding to the position is less than a predetermined variance threshold value and, in the form information of which the reference position is not revised, a distance between a position of form information, of which a distance from the revised position satisfies a predetermined condition, and the revised position is less than a predetermined distance threshold value.

7. The information processing apparatus according to claim 4, wherein the processor is configured to:
   accept correction of the revised position executed by a user in a case where the variance of the distance between the position of the extracted form information and the reference position corresponding to the position is less than a predetermined variance threshold value and, in the form information of which the reference position is not revised, a distance between a position of form information, of which a distance from the revised position satisfies a predetermined condition, and the revised position is equal to or larger than a predetermined distance threshold value.

8. The information processing apparatus according to any one of claims 1 to 7, wherein the processor is configured to:
   correct a size of a circumscribed region of form information at the revised position using a difference between a size of a circumscribed region of form information, of which a distance from the revised position satisfies a predetermined condition, in the form information of which the reference position is not revised and a size of a circumscribed region of form information at a reference position corresponding to the position.

9. An information processing program causing a computer to execute a process comprising:

   acquiring a form image that is obtained from reading of a form in which form information including at least one of a predetermined item or an item value is written;
   extracting the form information from the acquired form image;
   identifying a reference form corresponding to the form image from the extracted form information;
   correcting a revised position using a difference between a position of form information, of which a corresponding reference position is not revised, of the extracted form information and a reference position corresponding to the position, in a case where the reference position of form information of the reference form is revised to the revised position by user's designation; and
   extracting the form information at the corrected revised position.

10. An information processing method comprising:

    acquiring a form image that is obtained from reading of a form in which form information including at least one of a predetermined item or an item value is written;
    extracting the form information from the acquired form image;
    identifying a reference form corresponding to the form image from the extracted form information;
    correcting a revised position using a difference between a position of form information, of which a corresponding reference position is not revised, of the extracted form information and a reference position corresponding to the position, in a case where the reference position of form information of the reference form is revised to the revised position by user's designation; and extracting the form information at the corrected revised position.

# FIG. 1

OPERATION UNIT — 12

DISPLAY UNIT — 13

COMMUNICATION UNIT — 14

STORAGE UNIT — 15

INFORMATION PROCESSING PROGRAM — 15A

FORM DB — 15B

KV EXTRACTION RESULT DB — 15C

REFERENCE FORM DB — 15D

I/O — 11D

CPU — 11A

ROM — 11B

RAM — 11C

10

11

11E

# FIG. 2

30

IMAGE READING
APPARATUS

11

| 15 STORAGE UNIT | | FORM ACQUISITION UNIT | 20 |
| --- | --- | --- | --- |
| 15B | FORM DB | KEY/ VALUE-EXTRACTING UNIT | 21 |
| 15C | KV EXTRACTION RESULT DB | FORM IDENTIFICATION UNIT | 22 |
| 15D | REFERENCE FORM DB | REVISION PROCESSING UNIT | 23 |
| | | REVISED POSITION-CORRECTING UNIT | 24 |

# FIG. 3

INVOICE    T3

ISSUE DATE (ISSUE DATE)    12/25/2020
INVOICE NUMBER (INVOICE No.)   A12345

T2

XYZ CO., LTD.
O-O-O EBINA-SHI, KANAGAWA

O-O-O ROPPONGI, MINATO-KU, TOKYO
ABC CO., LTD.

DEAR SIR YAMADA TARO

T1

AMOUNT BILLED   ¥0000

| BILLING DETAILS | AMOUNT OF MONEY |
|---|---|
|  |  |

# FIG. 4

```
                    ┌──────────────┐
                    │    START     │
                    └──────┬───────┘
                           │
        ┌──────────────────────────────────┐
        │       ACQUIRE FORM IMAGE          │──── S100
        └──────────────────┬───────────────┘
                           │
        ┌──────────────────────────────────┐
        │      EXTRACT KEY AND VALUE        │──── S102
        └──────────────────┬───────────────┘
                           │
        ┌──────────────────────────────────┐
        │          IDENTIFY FORM            │──── S104
        └──────────────────┬───────────────┘
                           │
                                                S106
                    ╱IS THERE ╲
                   ╱ FORM HAVING SAME ╲    N
                   ╲   FORMAT?        ╱──────────────────────┐
                    ╲               ╱                        │
                           │ Y                               │
                      S110 │                                 │
        ┌──────────────────────────────────┐    ┌──────────────────────────────────┐
        │     CORRECT REVISED POSITION      │    │   REGISTER EXTRACTION RESULT      │──── S108
        └──────────────────┬───────────────┘    │ INFORMATION IN REFERENCE FORM DB  │
                           │                     └──────────────────┬───────────────┘
        ┌──────────────────────────────────┐                       │
        │   AUTOMATICALLY REVISE POSITION   │──── S112              │
        │    AND SIZE OF KEY OR VALUE       │                       │
        └──────────────────┬───────────────┘                       │
                           │◄──────────────────────────────────────┘
        ┌──────────────────────────────────┐
        │    CONFIRM AND REVISE POSITION    │──── S114
        │            OF VALUE               │
        └──────────────────┬───────────────┘
                           │
        ┌──────────────────────────────────┐
        │   REGISTER EXTRACTION RESULT      │──── S116
        │   INFORMATION, WHICH HAS BEEN     │
        │    SUBJECTED TO REVISION,         │
        │     IN REFERENCE FORM DB          │
        └──────────────────┬───────────────┘
                           │
                    ┌──────────────┐
                    │     END      │
                    └──────────────┘
```

# FIG. 5

| Name | EXTRACTION RESULT | X COORDINATE | Y COORDINATE | WIDTH | HEIGHT |
|---|---|---|---|---|---|
| TITLE (Value) | INVOICE | ... | ... | ... | ... |
| ISSUE SOURCE (Value) | XYZ CO., LTD. | ... | ... | ... | ... |
| ISSUE DESTINATION (Key) | DEAR SIR | ... | ... | ... | ... |
| ISSUE DESTINATION (Value) | YAMADA TARO | ... | ... | ... | ... |
| INVOICE NUMBER (Key) | INVOICE NUMBER | ... | ... | ... | ... |
| INVOICE NUMBER (Value) | (INVOICE No.) | ... | ... | ... | ... |
| ISSUE DATE (Key) | ISSUE DATE | ... | ... | ... | ... |
| ISSUE DATE (Value) | (ISSUE DATE) | ... | ... | ... | ... |

# FIG. 6

FORM A TO BE PROCESSED

REFERENCE FORM B

REFERENCE FORM C

REFERENCE FORM D

REFERENCE FORM E

EP 4 064 227 A1

# FIG. 7

|   | A | B | C | D | E |
|---|---|---|---|---|---|
| A | 1 | 0.565 | 0.913 | 0.513 | 0.769 |
| B |   | 1 | 0.598 | 0.427 | 0.742 |
| C |   |   | 1 | 0.470 | 0.799 |
| D |   |   |   | 1 | 0.355 |
| E |   |   |   |   | 1 |

## FIG. 8

INVOICE

K1 —
ISSUE DATE (ISSUE DATE) — V1 12/25/2020
INVOICE NUMBER (INVOICE No.) A12345
K2 — — V2

XYZ CO., LTD.
◯-◯-◯ EBINA-SHI, KANAGAWA

◯-◯-◯ ROPPONGI, MINATO-KU, TOKYO
ABC CO., LTD.

DEAR SIR YAMADA TARO

AMOUNT BILLED   ¥◯◯◯◯

| BILLING DETAILS | AMOUNT OF MONEY |
|---|---|
|  |  |

## FIG. 9

```
         ┌─────────────────────────────┐
         │  REVISED POSITION-CORRECTION │
         │         PROCESSING           │
         └─────────────────────────────┘
                        │
                        ▼              ┌─ S200
                   ╱─────────────╲
                  ╱   IS THERE     ╲
          N      ╱ KEY OR VALUE HAVING╲
        ◄───────  BEEN SUBJECTED TO
                  ╲    REVISION?    ╱
                   ╲───────────────╱
                        │ Y
                        ▼
         ┌─────────────────────────────┐
         │  CALCULATE DISTANCE BETWEEN  │── S202
         │ REVISED POSITION AND POSITION OF│
         │     OTHER KEYS OR VALUES     │
         └─────────────────────────────┘
                        │
                        ▼
         ┌─────────────────────────────┐
         │      SPECIFY POSITION OF     │── S204
         │  KEY OR VALUE CORRESPONDING TO│
         │       SHORTEST DISTANCE      │
         └─────────────────────────────┘
                        │
                        ▼
         ┌─────────────────────────────┐
         │ CALCULATE VARIANCE OF DISTANCE│── S206
         │ BETWEEN REFERENCE POSITION AND│
         │ POSITION OF EACH KEY AND VALUE│
         └─────────────────────────────┘
                        │
                        ▼              ┌─ S208
                   ╱─────────────╲
                  ╱  IS VARIANCE   ╲    N
                 ╱ EQUAL TO OR LESS THAN╲──────────┐
                  ╲ THRESHOLD VALUE ╱              │
                  ╲     TH1?      ╱                ▼        ┌─ S210
                   ╲───────────────╱          ╱─────────────╲
                        │ Y                  ╱  IS SHORTEST   ╲   N
                        │                   ╱ DISTANCE LESS THAN╲──┐
                        │                    ╲ THRESHOLD VALUE ╱    │
                        │                    ╲     TH2?      ╱      │
                        │                     ╲─────────────╱       │
                        │                          │ Y             │
                        │◄─────────────────────────┘               │
                        ▼                                          │
         ┌─────────────────────────────┐                          │
         │     CALCULATE AMOUNTS OF     │── S212                   │
         │  DEVIATION IN POSITION AND SIZE│                        │
         └─────────────────────────────┘                          │
                        │                                          │
                        ▼                                          │
         ┌─────────────────────────────┐                          │
         │   CORRECT POSITION AND SIZE  │── S214                   │
         └─────────────────────────────┘                          │
                        │                                          │
                        │◄─────────────────────────────────────────┘
                        ▼
                  ┌───────────┐
                  │  RETURN   │
                  └───────────┘
```

# FIG. 10

F

INVOICE  ISSUE DATE: 12/31/2020

No: 123456

DEAR SIR FUJI TARO

A CO., LTD.

DEADLINE: DUE DATE  1/31/2021

W1

## FIG. 11

INVOICE

FP2 — P2

FP3 — P3

DEAR SIR FUJI TARO

P4

ISSUE DATE: 12/31/2020

FP4
FP5 — P5

No: 123456

D1

FP6 — P6

A CO., LTD.

P1

DEADLINE: DUE DATE 1/31/2021

D1

F

H

## FIG. 12

REFERENCE FORM A

| Name | EXTRACTION RESULT | x | y | width | height |
|---|---|---|---|---|---|
| TITLE | INVOICE | 1100 | 100 | 100 | 40 |
| ISSUE SOURCE | A CO., LTD. | 1750 | 800 | 100 | 30 |
| ISSUE DESTINATION (Key) | DEAR SIR | 950 | 500 | 30 | 30 |
| ISSUE DESTINATION (Value) | FUJI TARO | 100 | 500 | 75 | 30 |
| No (Key) | NUMBER | 1500 | 360 | 50 | 30 |
| No (Value) | 123456 | 1560 | 360 | 100 | 30 |
| ISSUE DATE (Key) | ISSUE DATE | 1500 | 180 | 75 | 30 |
| ISSUE DATE (Value) | 12/31/2020 | 1700 | 180 | 150 | 30 |
| DEADLINE (Key) | DEADLINE | 1000 | 900 | 50 | 30 |
| DEADLINE (Value) | DUE DATE | 1060 | 900 | 150 | 30 |
| DEADLINE (Value) AFTER REVISION | 1/31/2021 | 1600 | 900 | 150 | 30 |

## FIG. 13

FORM F

| Name | EXTRACTION RESULT | x | y | width | height |
|---|---|---|---|---|---|
| TITLE | INVOICE | 1131 | 121 | 101 | 404 |
| ISSUE SOURCE | A CO., LTD. | 17875 | 828 | 101 | 303 |
| ISSUE DESTINATION (Key) | DEAR SIR | 9795 | 525 | 303 | 303 |
| ISSUE DESTINATION (Value) | FUJI TARO | 121 | 525 | 7575 | 303 |
| No (Key) | NUMBER | 1535 | 3836 | 505 | 303 |
| No (Value) | 123456 | 15956 | 3836 | 101 | 303 |
| ISSUE DATE (Key) | ISSUE DATE | 1535 | 2018 | 7575 | 303 |
| ISSUE DATE (Value) | 12/31/2020 | 1737 | 2018 | 1515 | 303 |
| DEADLINE (Key) | DEADLINE | 1230 | 1099 | 505 | 303 |
| DEADLINE (Value) | DUE DATE | 12206 | 1329 | 1515 | 303 |
| DEADLINE (Value) AFTER REVISION | | 1600 | 900 | 150 | 30 |

# FIG. 14

AMOUNT OF DEVIATION BETWEEN REFERENCE FORM A AND FORM F

| Name | EXTRACTION RESULT | x | y | width RATIO | height RATIO | DISTANCE FROM DEADLINE (Value) AFTER REVISION |
|---|---|---|---|---|---|---|
| TITLE | INVOICE | 31 | 21 | 101 | 101 | 9093 |
| ISSUE SOURCE | A CO., LTD. | 375 | 28 | 101 | 101 | 2008 |
| ISSUE DESTINATION (Key) | DEAR SIR | 295 | 25 | 101 | 101 | 7250 |
| ISSUE DESTINATION (Value) | FUJI TARO | 21 | 25 | 101 | 101 | 15258 |
| No (Key) | NUMBER | 35 | 236 | 101 | 101 | 5205 |
| No (Value) | 123456 | 356 | 236 | 101 | 101 | 5164 |
| ISSUE DATE (Key) | ISSUE DATE | 35 | 218 | 101 | 101 | 7012 |
| ISSUE DATE (Value) | 12/31/2020 | 37 | 218 | 101 | 101 | 7115 |
| DEADLINE (Key) | DEADLINE | 230 | 199 | 101 | 101 | 4201 |
| DEADLINE (Value) | DUE DATE | 1606 | 429 | | | |
| DEADLINE (Value) AFTER REVISION | 1/31/2021 | 1140 | 900 | | | 150 | 30 |
| | VARIANCE | 38681 | 30382 | | | |
| DEADLINE (Value) AFTER REVISION | 1/31/2021 | 11775 | 928 | 1515 | 303 | |

# FIG. 15

FORM F

| Name | EXTRACTION RESULT | x | y | width | height |
|---|---|---|---|---|---|
| TITLE | INVOICE | 1120 | 120 | 100 | 40 |
| ISSUE SOURCE | A CO., LTD. | 1770 | 820 | 100 | 30 |
| ISSUE DESTINATION (Key) | DEAR SIR | 970 | 520 | 30 | 30 |
| ISSUE DESTINATION (Value) | FUJI TARO | 120 | 520 | 75 | 30 |
| No (Key) | NUMBER | 1520 | 380 | 50 | 30 |
| No (Value) | 123456 | 1580 | 380 | 100 | 30 |
| ISSUE DATE (Key) | ISSUE DATE | 1520 | 200 | 75 | 30 |
| ISSUE DATE (Value) | 12/31/2020 | 1720 | 200 | 150 | 30 |
| DEADLINE (Key) | DEADLINE | 1020 | 920 | 50 | 30 |
| DEADLINE (Value) | DUE DATE | 1080 | 920 | 150 | 30 |
| DEADLINE (Value) AFTER REVISION | | 1600 | 900 | 150 | 30 |

# FIG. 16

AMOUNT OF DEVIATION BETWEEN REFERENCE FORM A AND FORM F

| Name | EXTRACTION RESULT | x | y | width RATIO | height RATIO | DISTANCE FROM DEADLINE (Value) AFTER REVISION | |
|---|---|---|---|---|---|---|---|
| TITLE | INVOICE | 20 | 20 | 1 | 1 | 9159 | |
| ISSUE SOURCE | A CO., LTD. | 20 | 20 | 1 | 1 | 1879 | |
| ISSUE DESTINATION (Key) | DEAR SIR | 20 | 20 | 1 | 1 | 7357 | |
| ISSUE DESTINATION (Value) | FUJI TARO | 20 | 20 | 1 | 1 | 15280 | |
| No (Key) | NUMBER | 20 | 20 | 1 | 1 | 5261 | |
| No (Value) | 123456 | 20 | 20 | 1 | 1 | 5204 | |
| ISSUE DATE (Key) | ISSUE DATE | 20 | 20 | 1 | 1 | 7046 | |
| ISSUE DATE (Value) | 12/31/2020 | 20 | 20 | 1 | 1 | 7102 | |
| DEADLINE (Key) | DEADLINE | 20 | 20 | 1 | 1 | 5803 | |
| DEADLINE (Value) | DUE DATE | 20 | 20 | | | | |
| DEADLINE (Value) AFTER REVISION | 1/31/2021 | 1140 | 900 | | | 150 | 30 |
| | VARIANCE | 0.0 | 0.0 | | | | |
| DEADLINE (Value) AFTER REVISION | 1/31/2021 | 1160 | 920 | 150 | 30 | | |

## EUROPEAN SEARCH REPORT

**Application Number**

**EP 21 19 4365**

### DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | CN 111 989 692 A (BEIJING SENSETIME TECH DEVELOPMENT CO LTD)<br>24 November 2020 (2020-11-24)<br>* the whole document * | 1-10 | INV.<br>G06V30/412<br>G06V10/24<br>G06V10/22 |
| E | & US 2021/397830 A1 (ZHAN MINGJIE [CN] ET AL) 23 December 2021 (2021-12-23)<br>* paragraph [0168]; claim 1 *<br>----- | 1-10 | |

| | |
|---|---|
| | TECHNICAL FIELDS<br>SEARCHED (IPC) |
| | **G06V** |

The present search report has been drawn up for all claims

| Place of search | Date of completion of the search | Examiner |
|---|---|---|
| The Hague | 17 February 2022 | Nowbakht Irani, Ali |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .......................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 19 4365

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2022

| Patent document cited in search report | Publication date | Patent family member(s) | Publication date |
|---|---|---|---|
| CN 111989692 A | 24-11-2020 | CN 111989692 A<br>JP 2022504454 A<br>US 2021397830 A1 | 24-11-2020<br>13-01-2022<br>23-12-2021 |

EPO FORM P0459

For more details about this annex : see Official Journal of the European Patent Office, No. 12/82

**EP 4 064 227 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002170079 A